# EUROPÄISCHE PATENTANMELDUNG

(11) **EP 2 006 346 A2**
(43) Veröffentlichungstag der Anmeldung: **24.12.2008**
(21) Anmeldenummer: 08010778.2
(22) Anmeldetag: 13.06.2008
(51) Int. Cl.: C09K 5/06

(54) **Polyolefinwachse als Phasenwechselmaterial (PCM) für den Gebrauch als Latentwärmespeicher**

(30) Priorität: 20.06.2007 DE 102007028309
(71) Anmelder: Clariant International Ltd., 4132 Muttenz (CH)
(72) Erfinder: Fell Rainer, Dr., 86368 Gersthofen (DE); Diem, Hermann, DI., 86517 Wehringen (DE); Staniek, Peter, Dr., 79589 Binzen (DE)
(74) Vertreter: Hütter, Klaus

(57) **Zusammenfassung**

Latentwärmespeicher auf Basis eines organischen Werkstoffs, der bei einer Temperatur im Bereich von 80 bis 160 °C schmilzt, enthaltend ein oder mehrere Polyolefinwachse, die über eine metallocen-katalysierte Reaktion hergestellt wurden. Die Polyolefinwachse liegen im Werkstoff vorzugsweise als Pulver, Granulat oder Block vor und sind Homopolymerisate des Ethylens oder des Propylens oder Copolymerisate des Propylens mit Ethylen oder Copolymerisate des Ethylens mit Propylen oder mit einem oder mehreren 1-Olefinen. Der Werkstoff besitzt eine Schmelzenenthalpie im Bereich von 70 bis 280 J/g.

## Beschreibung

Die vorliegende Erfindung betrifft den Einsatz von Polyolefinwachsen, insbesondere von Licocene^{®} Performance Polymeren, als Phasenwechselmaterial für den Gebrauch als Latentwärmespeicher.

Phasenwechselmaterialien (engl. phase change material, PCM) werden als Latentwärmespeicher bezeichnet und nutzen die Schmelzenthalpie während der Änderung des Aggregatszustandes (Phasenübergang) eines Werkstoffes/Phasenwechselmaterial (z. B. fest-flüssig) zur Speicherung von Energie (Wärme). Unter Latentwärmespeicherung versteht man die Speicherung von Wärme in einem Werkstoff (Phasenwechselmaterial), welcher einen Phasenübergang, vorwiegend fest-flüssig, erfährt Neben dem Phasenübergang fest-flüssig können prinzipiell auch fest-fest Phasenübergänge eingesetzt werden. Diese zeigen in der Regel jedoch weit geringere Speicherdichten. Bei der Speicherung von Energie (Wärme) in den Speicher beginnt der Werkstoff bei Erreichen der Temperatur des Phasenübergangs zu schmelzen. Trotz weiterer Speicherung von Energie (Wärme) erhöht sich seine Temperatur nicht. Erst wenn der Werkstoff komplett geschmolzen ist, tritt wieder eine Erhöhung der Temperatur auf. Da für längere Zeit trotz Energiezufuhr keine merkliche Temperaturerhöhung auftritt, nennt man die während des Phasenübergangs eingespeicherte Energie "versteckte Wärme" oder auch "latente Wärme".

Durch den Effekt der latenten Wärme ergeben sich zwei Vorteile:
- es ist nun möglich, in einem Bereich kleiner Temperaturänderungen verhältnismäßig hohe Wärmemengen zu speichern und somit hohe Speicherdichten zu erreichen.
- da der Phasenübergang bei konstanter Temperatur über einen bestimmten Zeitraum vonstatten geht, besteht die Möglichkeit Temperaturschwankungen zu glätten und Temperaturspitzen zu minimieren.

Die Auswahlkriterien an Werkstoffe als PCM beschreiben sich wie folgt:
- chemische und physikalische Stabilität gegen äußere Einflüsse
- geeignete Temperatur des Phasenüberganges (Änderung des Aggregatszustandes)
- geringe Korrosivität
- geringe Unterkühlung
- geringe Volumenänderung
- geringer Dampfdruck
- hohe Schmelzenthalpieänderung und hohe Wärmekapazität
- hohe Speicherdichte
- möglichst hohe Wärmeleitfähigkeit
- reproduzierbarer Phasenübergang

Werkstoffe/Phasenwechselmaterialien als Latentwärmespeicher können in einem bestimmten Temperaturbereich eingesetzt werden. Ja nach Anwendung und Einsatz muss der Werkstoff mit geeigneter Temperatur des Phasenwechsels ausgewählt werden. Je nach Temperaturbereich werden dabei verschiedene Werkstoffgruppen eingesetzt. Typische Werkstoffgruppen und deren Einsatztemperaturen, welche als PCM eingesetzt werden können, sind:
- Gashydrate (ca. 0 °C bis 20 °C),
- Paraffine (ca. 0 °C bis 110 °C) in mikro- oder makroverkapselter Form
- HDPE (Polyethylen hoher Dichte)
- Salze und deren eutektische Mischungen (ca. > 150 °C)
- Salzhydrate und deren Mischungen (ca. 0 °C bis 130 °C),
- Salz-Wasser Eutektika (ca. -100 °C bis 0 °C),
- Wasser,
- Zuckeralkohle (ca. 50 °C bis 170 °C),

Für die "Kältespeicherung" bei niedrigen Temperaturen (ca. 0 °C) werden Wasser oder wässrige Salzlösungen eingesetzt. Für die Wärmespeicherung im Temperaturbereich von ca. 5 °C bis 100 °C werden vorwiegend Paraffine, von 5 °C bis 150 °C Salzhydrate und deren eutektischen Mischungen verwendet. Für die Wärmespeicherung im Temperaturbereich oberhalb ca. 150 °C werden Salze und deren eutektische Mischungen eingesetzt.
Typische Konstruktionen bzw. Funktionskonzepte von Latentwärmespeicher, welche sich bereits im technischen Einsatz befinden, können sein:
- Latentwärmespeicher mit Plattenwärmeübertragung
- Latentwärmespeicher bei dem PCM und Wärmeträger-Fluid in direktem Kontakt sind
- Latentwärmespeicher mit Rohrbündelwärmeübertragung
- Latentwärmespeicher mit Wärmeträger-Fluid und PCM-Elementen.

Typische Anwendungsbereiche von Latentwärmespeicher sind:
- allgemeine Kälte- und Klimatechnik
- Ersatz von Warmwasserspeichern in konventionellen Heizsystemen
- Gebäudetechnik
- Kleidung
- Solar- und Luftsystemen
- Speicherung von Prozesswärme
- Überhitzungsschutz von Bauteilen und im Brandfall
- Verlangsamung des Abkühlens bei Hochtemperatur-Prozessen
- Wärme- bzw. Kältepufferung temperaturempfindlicher Güter.

Darüber hinaus ist zum Stand der Technik auf die Schutzrechte DE 199 02 990 A1; US-4,908,166; DE 199 29 861 und DE 102 00316 zu verweisen.

PCM können nur dann erfolgreich Verwendung finden, wenn sich deren Eigenschaften bei langfristigem Einsatz nicht negativ verändern und das Temperaturverhalten der verwendeten Werkstoffe als PCM mit den Temperaturen der Wärmeträgermedia in Einklang stehen.

Je höher die Schmelzenenthalpie und je höher die Wärmekapazität eines Werkstoffes sind, desto besser ist dieser Werkstoff als PCM einsetzbar. Im Temperaturbereich 0 bis 110 °C werden im Allgemeinen Paraffine eingesetzt, welche aus Mischungen von langkettigen Kohlenwasserstoffe bestehen. Bei Paraffinen als PCM ergeben sich kaum technische Probleme, da dieser Werkstoff nur aus einer Stoffgruppe besteht und keine Lösungsmittel enthält. Es können sich keine Stoffe separieren.

Somit sind wichtige Voraussetzungen wie ein reproduzierbarer Phasenübergang, toxikologische Unbedenklichkeit und inertes Verhalten gegenüber anderen Werkstoffen/Phasenwechselmaterialien (keine Korrosion gegenüber Metallen) gewährleistet. Nachteilig gelten bei Paraffinen die vergleichsweise niedrigen Schmelzenthalpien von bis zu ca. 200 J/g bei Dichten zwischen ca. 0,7 bis 0,9 kg/dm³ sowie die niedrige Wärmeleitfähigkeit von ca.: 0,5 W/m*K).

Für den Temperaturbereich 5 bis 150 °C werden die Salzhydrate den Paraffinen und den wässrigen Salzlösungen vorgezogen. Die Schmelzenthalpien unterscheiden sich nur geringfügig von denen der Paraffine, jedoch weisen sie höhere Dichten im Bereich von ca. 1,4 bis 1,6 kg/dm³ auf. Somit vergrößert sich deren Energiedichte. Nachteilig gelten bei Salzhydraten die vergleichsweise niedrigen Schmelzenthalpien von ca. 200 J/g sowie das meist inkongruente Schmelzverhalten und die Trennung der Schmelzprodukte auf Grund der verschiedenen Dichten. Eine Verfestigung der Substanzen vollzieht sich meist nur unvollständig. Zudem zeigen Salzhydrate gegenüber Metallen meist ein korrosives Verhalten.

Es war daher Aufgabe der vorliegenden Erfindung Werkstoffe als PCM für den Gebrauch als Latentwärmespeicher im Temperaturbereich 0 bis 180 °C mit höheren Schmelzenthalpien, hohen Wärmeleitfähigkeiten und höheren Be- und Entladungszyklen mit Energie (Wärme) zur Verfügung zu stellen, welche die genannten Nachteile, wie niedrige Schmelzenthalpie, hohe Korrosivität, Unterkühlung, hohe Volumenänderung, Dampfdruck, niedrige Wärmekapazität, niedrige Speicherdichte, irreproduzierbarer Phasenübergang und toxikologische Bedenklichkeit sowie Phasentrennung nicht zeigen.

Die latente Wärme sollte dabei im Bereich 80 bis 160 °C auftreten.

Die vorliegende Erfindung löst diese Aufgabe und betrifft Latentwärmespeicher auf Basis eines organischen Werkstoffs, der bei einer Temperatur im Bereich von 80 bis 160 °C schmilzt, enthaltend ein oder mehrere Polyolefinwachse, die über eine metallocen-katalysierte Reaktion hergestellt wurden.

Der erfindungsgemäße Werkstoff, enthält das oder die Polyolefinwachse als Pulver, Granulat oder Block und zeigt eine Schmelzenenthalpie im Bereich von 70 bis 280 J/g.

Die im erfindungsgemäßen Werkstoff/Phasenwechselmaterial enthaltenen Polyolefine sind Polyolefinwachse, die vorzugsweise aus Homopolymerisaten des Ethylens bzw. des Propylens oder Copolymerisaten des Propylens mit Ethylen oder Copolymerisaten des Ethylens mit Propylen oder mit einem oder mehreren 1-Olefinen, hergestellt werden.

Besonders vorteilhafte Eigenschaften werden gefunden, wenn der Werkstoff ein Wachs ist, das in Gegenwart von Metallocen als Katalysator aus Olefinen, vorzugsweise aus Ethylen oder Propylen, besonders bevorzugt aus Ethylen durch Polymerisation hergestellt wird.

Die Synthese der Metallocen-Polyolefinwachse kann unter einem Druck von 0,1 bis 10 MPa in Gasphase oder in Suspension oder in Lösung in einem geeigneten Suspendier-/Lösungsmittel nach bekannten Technologien erfolgen.

Metallocenkatalysatoren zur Herstellung der Polyolefinwachse sind chirale oder achirale Übergangsmetallverbindungen der Formel M¹Lₓ. Die Übergangsmetallverbindung M¹Lₓ enthält mindestens ein Metallzentralatom M¹, an das mindestens ein π-Ligand, z. B. ein Cyclopentadienylligand, gebunden ist. Darüber hinaus können Substituenten, wie z. B. Halogen-, Alkyl-, Alkoxy- oder Arylgruppen an das Metallzentralatom M1 gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, so genannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z. B. beschrieben in EP-A-632063.

Beispiele für allgemeine Strukturformeln von Metallocenen sowie für deren Aktivierung mit einem Cokatalysator sind u. a. in EP-A-571882 gegeben.

Der erfindungsgemäße Werkstoff, der Pulver oder Granulat aus metallocen-katalysierten Polyolefinwachsen enthält, besitzt überraschenderweise sehr hohe Schmelzenthalpien von bis zu 280 J/g im Schmelztemperaturbereich ca. 80 bis 160 °C liegen. Bevorzugt werden metallocen-katalysierte Polyolefinwachse eingesetzt, die eine Schmelzenthalpie von 70 bis 270 J/g bei Tropfpunkten von 100 bis 150 °C zeigen. Besonders bevorzugt sind metallocen-katalysierten Polyolefinwachse mit Schmelzenthalpie von 200 bis 270 J/g und Tropfpunkten von 110 bis 145 °C. Die Dichten der Werkstoffe bewegen sich im Bereich von 0,89 bis 0,98 kg/dm³.

Da das im erfindungsgemäßen Werkstoff enthaltene Polyolefin keine reaktiven chemischen Gruppen enthält, ist es chemisch inert, so dass mit handelsüblichen Materialien wie Metallen und Kunststoffen keine chemische Reaktion stattfindet, was in Bezug auf die Auslegung der Latentwärmespeicher förderlich ist.

Der Werkstoff im Gebrauch als Latentwärmespeicher zeichnet sich durch eine sehr gute Verträglichkeit zu Paraffinen und Polyolefinen aus, was den Vorteil hat, dass Latentwärmespeicher aus Mischungen von Komponenten wie metallocen-katalysierten Polyolefinwachsen, Paraffinen und Polyolefinen (z. B. HighDendityPolyEthylene = HDPE) eingesetzt werden können. Mischungsverhältnisse bis zu 50 % an Paraffin und/oder Polyolefinen (HDPE) sind durchaus denkbar.

Darüber hinaus können Additive (Wärmestabilisatoren, Antioxidantien, Lichtschutzstabilisatoren) zur Erhöhung der Zyklusfestigkeiten eines Latentwärmespeichers und zur Verlängerung der Lebensdauer enthalten sein. Der Anteil an Additive kann im Bereich von 0 bis 20 %, bevorzugt 0 bis 5 % liegen.

Ferner können Additive zur Erhöhung der Wärmeleitfähigkeit wie beispielsweise Metall (Metallpulver oder Metallfäden) oder reiner Kohlenstoff (Graphitpulver oder Graphitflocken) enthalten sein. Der Anteil an solchen Additiven zur Steigerung der Wärmeleitfähigkeit kann bis zu 50 %, bevorzugt 0 bis 30 % betragen.

Der erfindungsgemäße Werkstoff als PCM für den Gebrauch in Latentwärmespeichersystemen liegt als Granulat, Pulver oder Block vor und kann in Platten, Profile, dreidimensionale Körper problemlos geformt werden.
Als Polyolefinwachse eignen sich insbesondere Licocene^{®} Performance Polymere der Firma Clariant, die eine sehr hohe Schmelzenthalpiedichte (70 bis 280 J/g bei Dichten von 0,9 kg/dm³ bis 0,97 kg/m³) aufweisen. Die Schmelzpunkte dieser Polymere liegen im Bereich von 80 bis 160 °C. Insbesondere werden als Polyolefinewachse ein oder mehrere der folgenden Produkte der Firma Clariant eingesetzt: TP Licocene^{®} PE 3401, TP Licocene^{®} PE 4201, TP Licocene^{®} PE 5301 und/oder TP Licocene^{®} PP 6102.

Zudem sind Licocene^{®} Performance Polymere toxikologisch unbedenklich, chemisch inert, weisen keine Entmischung auf, sind keine Gefahrstoffe und haben einen reproduzierbaren Phasenwechsel (fest-flüssig).

### Beispiele

Die Erfindung wird durch die nachstehenden Beispiele erläutert, ohne sie darauf einzuschränken. Beispiele für die Metallocen-Polyolefinwachse die einzeln oder in Mischungen vorteilhaft in Pulverform als PCM für Latentwärmespeicher der hier vorgestellten Erfindung eingesetzt werden können sind:
Metallocen-PE-Wachse:
   TP Licocene^{®} PE 3401
   TP Licocene^{®} PE 4201
   TP Licocene^{®} PE 5301
   TP Licocene^{®} PP 6102

Hersteller der vorgenannten Wachse ist die Clariant Produkte (Deutschland) GmbH.

### Beispiel 1:

Mit TP Licocene^{®} wurden DSC-Messungen (Differentiale Scanning Calometrie) durchgeführt. Dabei wurden folgende Schmelzenthalpien bestimmt:

| | Schmelzenthalpie [J/g] | Tropfpunkt [°C] | Dichte [kg/dm³] |
|---|---|---|---|
| TP Licocene^{®} PE 3401 | 170 | 114 | 0,93 |
| TP Licocene^{®} PE 4201 | 260 | 128 | 0,97 |
| Licocene^{®} PE 5301 | 260 | 130 | 0,97 |
| TP Licocene^{®} PP 6102 | 70 | 145 | 0,90 |

Unter zyklischem Aufheizen (Schmelzen) und zyklischem Abkühlen (Erstarren) wurde festgestellt, dass der Phasenübergang stabil und reproduzierbar ist. Dabei wurde der erfindungsgemäße Werkstoff weder thermisch abgebaut noch fand eine Zersetzung statt.

## Patentansprüche

1. Latentwärmespeicher auf Basis eines organischen Werkstoffs, der bei einer Temperatur im Bereich von 80 bis 160 °C schmilzt, enthaltend ein oder mehrere Polyolefinwachse, die über eine metallocen-katalysierte Reaktion hergestellt wurden.

2. Latentwärmespeicher nach Anspruch 1, **dadurch gekennzeichnet, dass** das oder die Polyolefinwachse im Werkstoff als Pulver, Granulat oder Block vorliegen.

3. Latentwärmespeicher nach Anspruch 1 und/oder 2, **dadurch gekennzeichnet, dass** als Polyolefinwachse, Homopolymerisate des Ethylens oder des Propylens oder Copolymerisate des Propylens mit Ethylen oder Copolymerisate des Ethylens mit Propylen oder mit einem oder mehreren 1-Olefinen verwendet werden.

4. Latentwärmespeicher nach mindestens einem der vorhergehenden Ansprüche, **dadurch gekennzeichnet, dass** der Werkstoff eine Schmelzenenthalpie im Bereich von 70 bis 280 J/g aufweist.

5. Latentwärmespeicher nach mindestens einem der vorhergehenden Ansprüche, **dadurch gekennzeichnet, dass** Polyolefinwachse verwendet werden, die eine Schmelzenthalpie von 70 bis 270 J/g bei Tropfpunkten von 100 bis 150 °C besitzen.

6. Latentwärmespeicher nach Anspruch 6, **dadurch gekennzeichnet, dass** Polyolefinwachse mit Schmelzenthalpien von 200 bis 270 J/g und Tropfpunkten von 110 bis 145 °C verwendet werden.

7. Latentwärmespeicher nach mindestens einem der vorhergehenden Ansprüche, **dadurch gekennzeichnet, dass** dieser zusätzlich Additive aus der Gruppe: Wärmestabilisatoren, Antioxidantien, Lichtschutzstabilisatoren, Metall und/oder Kohlenstoff enthält.

8. Latentwärmespeicher nach mindestens einem der vorhergehenden Ansprüche, **dadurch gekennzeichnet, dass** als Polyolefinwachse eine oder mehrere der folgenden Produkte eingesetzt werden: TP Licocene^{®} PE 3401, TP Licocene^{®} PE 4201, TP Licocene^{®} PE 5301 und/oder TP Licocene^{®} PP 6102.

9. Verwendung von Polyolefinwachsen, die über eine metallocen-katalysierte Reaktion hergestellt wurden und eine Schmelzenenthalpie im Bereich von 70 bis 280 J/g aufweisen als Latentwärmespeicher.
